# EUROPÄISCHE PATENTSCHRIFT

(11) **EP 3 789 926 B1**
(45) Veröffentlichungstag und Bekanntmachung des Hinweises auf die Patenterteilung: **18.03.2026**
(21) Anmeldenummer: 20186826.2
(22) Anmeldetag: 21.07.2020
(51) Int. Cl.: G06N 3/0475, G06N 3/045, G06N 3/088, G06N 3/094, G06N 3/0464

(54) **VERFAHREN ZUM ERKENNEN EINER ADVERSARIALEN STÖRUNG IN EINGANGSDATEN EINES NEURONALEN NETZES**
METHOD FOR DETECTING AN ADVERSARIAL FAULT IN THE INPUT DATA OF A NEURAL NETWORK
PROCÉDÉ DE DÉTECTION D'UNE PERTURBATION ADVERSAIRE DANS DES DONNÉES D'ENTRÉE D'UN RÉSEAU DE NEURONES

(30) Priorität: 09.08.2019 DE 102019212020
(43) Veröffentlichungstag der Anmeldung: 10.03.2021
(73) Patentinhaber: VOLKSWAGEN AG, 38440 Wolfsburg (DE)
(72) Erfinder: Kapoor, Nikhil, 38440 Wolfsburg (DE); Schlicht, Peter, 38442 Wolfsburg (DE); Varghese, John Serin, 38126 Braunschweig (DE)

(56) Entgegenhaltungen:
- GOKULA KRISHNAN SANTHANAM ET AL: "Defending Against Adversarial Attacks by Leveraging an Entire GAN", ARXIV.ORG, CORNELL UNIVERSITY LIBRARY, 201 OLIN LIBRARY CORNELL UNIVERSITY ITHACA, NY 14853, 27 May 2018 (2018-05-27), XP080882896
- SHAOSHAN LIU ET AL: "Implementing a Cloud Platform for Autonomous Driving", 10 April 2017 (2017-04-10), arXiv.org, XP055720595, Retrieved from the Internet <URL:https://arxiv.org/ftp/arxiv/papers/1704/1704.02696.pdf> [retrieved on 20200806]
- JAN HENDRIK METZEN ET AL: "On Detecting Adversarial Perturbations", 21 February 2017 (2017-02-21), arXiv.org, pages 1 - 12, XP055539598, Retrieved from the Internet <URL:https://arxiv.org/abs/1702.04267> [retrieved on 20190109]
- CHAOWEI XIAO ET AL: "Generating Adversarial Examples with Adversarial Networks", ARXIV.ORG, CORNELL UNIVERSITY LIBRARY, 201 OLIN LIBRARY CORNELL UNIVERSITY ITHACA, NY 14853, 14 February 2019 (2019-02-14), XP081036369

## Beschreibung

Die Erfindung betrifft ein Verfahren zum Erkennen einer adversarialen Störung in Eingangsdaten eines Neuronalen Netzes. Ferner betrifft die Erfindung einen Backendserver, eine Detektionseinrichtung, ein System und ein Fahrzeug.

Maschinelles Lernen, beispielsweise auf Grundlage von Neuronalen Netzen, hat großes Potenzial für eine Anwendung in modernen Fahrerassistenzsystemen und automatisiert fahrenden Kraftfahrzeugen. Auf tiefen Neuronalen Netzen basierende Funktionen verarbeiten hierbei Sensordaten (zum Beispiel von Kameras, Radar- oder Lidarsensoren), um hieraus relevante Informationen abzuleiten. Diese Informationen umfassen zum Beispiel eine Art und eine Position von Objekten in einem Umfeld des Kraftfahrzeugs, ein Verhalten der Objekte oder eine Fahrbahngeometrie oder -topologie.

Unter den Neuronalen Netzen haben sich insbesondere Faltungsnetze (engl. Convolutional Neural Networks, CNN) als besonders geeignet für Anwendungen in der Bildverarbeitung erwiesen. Faltungsnetze extrahieren in unüberwachter Form stufenweise verschiedene hochwertige Merkmale aus Eingangsdaten (z.B. Bilddaten). Das Faltungsnetz entwickelt hierbei während einer Trainingsphase eigenständig Merkmalskarten basierend auf Filterkanälen, die die Eingangsdaten lokal verarbeiten, um hierdurch lokale Eigenschaften abzuleiten. Diese Merkmalskarten werden dann erneut von weiteren Filterkanälen verarbeitet, die daraus höherwertigere Merkmalskarten ableiten. Auf Grundlage dieser derart aus den Eingangsdaten verdichteten Informationen leitet das tiefe Neuronale Netz schließlich seine Entscheidung ab und stellt diese als Ausgangsdaten bereit.

Während Faltungsnetze klassische Ansätze an funktionaler Genauigkeit übertreffen, besitzen diese jedoch auch Nachteile. So können beispielsweise auf adversarialen Störungen in den Sensordaten/Eingangsdaten basierende Angriffe dazu führen, dass trotz eines semantisch nicht veränderten Inhalts in den erfassten Sensordaten eine Fehlklassifizierung bzw. falsche semantische Segmentierung erfolgt.

Aus I. Goodfellow et al., "Generative Adversarial Nets", Advances in Neural Information Processing Systems 27 (NIPS 2014), pp. 2672-2680, Curran Associates Inc., 2014, sind Generative Adversarial Networks bekannt. Aus M. Mirza und S. Osindero, "Conditional Generative Adversarial Nets", (arXiv:1411.1784v1 [cs.LG] 6 Nov 2014) sind Conditional Generative Adversarial Networks bekannt.

Aus G. K. Santhanam et al., Defending Against Adversarial Attacks by Leveraging an Entire GAN, arXiv, arXiv:1805.10652v1 [stat.ML], 27.05.2018, ist ein Verfahren zur Verteidigung gegen adversariale Störungen bekannt.

Aus S. Liu et al., Implementing a Cloud Platform for Autonomous Driving, arXiv, arXiv:1704.02696v1 [cs.DC], 10.04.2017, ist eine Cloud-basierte Plattform für das autonome Fahren bekannt.

Aus J.H. Metzen et al., On Detecting Adversarial Perturbations, arXiv, arXiv:1702.04267v2 [stat.ML], 21.02.2017, ist ein Verfahren zum Erkennen von adversarialen Störungen bekannt. Aus Chaowei Xiao et al., Generating Adversarial Examples with Adversarial Networks, arXiv, arXiv:1801.02610v5 [cs.CR], 14.02.2019, ist ein Verfahren zum Erzeugen von adversarialen Beispielen bekannt.

Der Erfindung liegt die Aufgabe zu Grunde, ein Verfahren zum Erkennen einer adversarialen Störung in Eingangsdaten eines, insbesondere tiefen, Neuronalen Netzes zu schaffen. Ferner liegt der Erfindung die Aufgabe zu Grunde, zugehörige Vorrichtungen zum Ausführen des Verfahrens zu schaffen.

Die Aufgabe wird erfindungsgemäß durch ein computerimplementiertes Verfahren mit den Merkmalen des Patentanspruchs 1, einen Backendserver mit den Merkmalen des Patentanspruchs 9, eine Detektionseinrichtung mit den Merkmalen des Patentanspruchs 10 und einem Computerprogramm mit den Merkmalen des Patentanspruchs 13 gelöst. Vorteilhafte Ausgestaltungen der Erfindung ergeben sich aus den Unteransprüchen.

Zur Verfügung gestellt wird insbesondere ein computerimplementiertes Verfahren zum Trainieren eines Diskriminatornetzes eines Conditional Generative Adversarial Networks zum Erkennen, mittels des trainierten Diskriminatornetzes, einer adversarialen Störung in Sensordaten mindestens eines Sensors eines Fahrzeugs, welche als Eingangsdaten einem Neuronalen Netz zugeführt werden, wobei das Neuronale Netz eine Funktion für das automatisierte Fahren des Fahrzeugs und/oder für eine Fahrerassistenz des Fahrzeugs und/oder für eine Erfassung eines Umfelds des Fahrzeugs und/oder Wahrnehmung des Umfelds des Fahrzeugs bereitstellt, wobei während einer Trainingsphase: ein Conditional Generative Adversarial Network trainiert wird, wobei hierbei ein Generatornetz des Conditional Generative Adversarial Network auf das Erzeugen von auf Eingangsdaten des Neuronalen Netzes konditionierten adversarialen Störungen trainiert wird oder wurde, und wobei ein Diskriminatornetz des Conditional Generative Adversarial Network zumindest auf das Erkennen einer adversarialen Störung in den von dem Generatornetz erzeugten Eingangsdaten trainiert wird, wobei das Conditional Generative Adversarial Network während mindestens einer weiteren Trainingsphase auf mindestens eine weitere adversariale Störung nachtrainiert wird, welche eine neue adversariale Störung ist und/oder neue Arten oder Klassen von adversarialen Störungen berücksichtigt.

Ferner wird insbesondere ein Backendserver geschaffen, umfassend eine Recheneinrichtung und eine Speichereinrichtung, wobei die Recheneinrichtung derart ausgebildet ist, während einer Trainingsphase ein Conditional Generative Adversarial Network bereitzustellen und das Diskriminatornetz des Conditional Generative Adversarial Networf gemäß dem Verfahren nach einer beliebigen der beschriebenen oder beanspruchten Ausführungsformen zu trainieren.

Weiter wird insbesondere eine Detektionseinrichtung zum Detektieren adversarialer Störungen in Eingangsdaten eines Neuronalen Netzes geschaffen, wobei das Neuronale Netz eine Funktion für das automatisierte Fahren eines Fahrzeugs und/oder für eine Fahrerassistenz des Fahrzeugs und/oder für Erfassung eines Umfelds des Fahrzeugs und/oder Wahrnehmung des Umfelds des Fahrzeugs bereitstellt, umfassend eine Recheneinrichtung und eine Speichereinrichtung, wobei die Recheneinrichtung derart ausgebildet ist, ein gemäß dem erfindungsgemäßen Verfahren trainiertes Diskriminatornetz bereitzustellen, und hiermit eine adversariale Störung in Eingangsdaten des Neuronalen Netzes zu erkennen und ein Erkennungsergebnis bereitzustellen, und wobei die Eingangsdaten Sensordaten mindestens eines Sensors des Fahrzeugs sind.

Das Verfahren ermöglicht es, adversariale Störungen in Eingangsdaten des Neuronalen Netzes über ein großes Kontinuum an Varianten der adversarialen Störungen zu erkennen. Das Erkennen erfolgt mittels eines trainierten Diskriminatornetzes eines Conditional Generative Adversarial Network. Um das Diskriminatornetz bereitzustellen, wird das Conditional Generative Adversarial Network trainiert. Das Conditional Generative Adversarial Network umfasst zwei Bestandteile: ein Generatornetz und das Diskriminatornetz. Der Grundgedanke hinter einem (Conditional) Generativen Adversarial Network ist, dass man das Generatornetz und das Diskriminatornetz während einer Trainingsphase gegeneinander antreten lässt. Das Generatornetz wird während der Trainingsphase darauf trainiert, auf Grundlage bekannter adversarialer Störungen adversarial gestörte Eingangsdaten für das Neuronale Netz zu generieren. Das Generatornetz wird hierbei auf bestimmte Eingangsdaten konditioniert, sodass ein Conditional Generative Adversarial Network bereitgestellt wird. Diese Konditionierung bildet hierbei insbesondere für die Art der Eingangsdaten bekannte adversariale Störungen ab, sodass das Generatornetz nach der Trainingsphase Muster dieser adversarialen Störungen in generierten Eingangsdaten reproduzieren kann. Dem Diskriminatornetz werden insbesondere sowohl vom Generatornetz erzeugte adversarial gestörte Eingangsdaten als auch ungestörte Eingangsdaten zugeführt. Das Diskriminatornetz wird während der Trainingsphase darauf trainiert, zu erkennen, ob die dem Diskriminatornetz zugeführten Eingangsdaten adversarial gestört sind oder nicht. Es kann auch vorgesehen sein, dass zusätzlich noch erkannt werden soll, ob die Eingangsdaten eine vom Generatornetz erzeugte adversariale Störung oder eine originäre adversariale Störung aufweisen, das heißt insbesondere mit einer ursprünglich im Trainingsdatensatz des Generatornetzes vorhandenen adversarialen Störung korrespondieren. Mit zunehmendem Training und "Wettstreit" zwischen dem Generatornetz und dem Diskriminatornetz verbessert sich sowohl das Generatornetz, das heißt dieses erzeugt immer schwerer zu detektierende adversariale Störungen in den generierten Eingangsdaten, als auch das Diskriminatornetz, das heißt dieses wird immer besser darin, adversariale Störungen in den vom Generatornetz erzeugten Eingangsdaten zu erkennen. Idealerweise wird nach der Trainingsphase ein Gleichgewichtszustand erreicht, bei dem das Diskriminatornetz von dem Generatornetz bereitgestellte adversarial gestörte Eingangsdaten mit einer Wahrscheinlichkeit von 50 % richtig klassifiziert. In einer der Trainingsphase nachfolgenden Anwendungsphase wird dann nur noch das trainierte Diskriminatornetz verwendet. Das trainierte Diskriminatornetz wird in der Anwendungsphase dazu verwendet, eine adversariale Störung in Eingangsdaten des, insbesondere tiefen, Neuronalen Netzes zu erkennen und ein Erkennungsergebnis bereitzustellen. Dem trainierten Diskriminatornetz werden hierzu aktuelle Eingangsdaten, beispielsweise aktuell erfasste Sensordaten, zugeführt. Das Erkennungsergebnis umfasst insbesondere eine Aussage bzw. Schätzung darüber, ob die Eingangsdaten adversarial gestört sind oder nicht.

Die Erfindung hat den Vorteil, dass eine Bandbreite an adversarialen Störungen, die in den Eingangsdaten des Neuronalen Netzes erkannt werden können, vergrößert ist. Die generierten Eingangsdaten weisen einen größeren Variantenreichtum auf, da nicht nur einzelne Repräsentanten von bekannten adversarialen Störungen, sondern ein breites Kontinuum aus bekannten adversarialen Störungen erzeugt bzw. abgebildet werden kann. In der Folge ist auch das Diskriminatornetz auf dieses Kontinuum trainiert, sodass das Erkennen von adversarialen Störungen in den Eingangsdaten des Neuronalen Netzes verbessert ist.

Ein weiterer Vorteil des Verfahrens ist, dass eine Rechenleistung reduziert werden kann, da das Diskriminatornetz auf einem Backendserver trainiert werden kann und anschließend im trainiertem Zustand mittels einer beispielsweise als Embedded System ausgebildeten Detektionseinrichtung mit einer geringeren Rechenleistung bereitgestellt werden kann.

Ein Neuronales Netz ist insbesondere ein tiefes Neuronales Netz, insbesondere ein Faltungsnetz (engl. Convolutional Neural Network, CNN). Das Neuronale Netz wird oder ist insbesondere auf eine bestimmte Funktion trainiert, beispielsweise auf eine Wahrnehmung von Fußgängern oder anderen Objekten in erfassten Kamerabildern. Die Erfindung ist insbesondere unabhängig von der konkreten Ausgestaltung des Neuronalen Netzes. Erfindungsgemäß sollen die Eingangsdaten, insbesondere dem Neuronalen Netz als Eingangsdaten zugeführte Sensordaten mindestens eines Sensors, überwacht werden und darin enthaltene adversariale Störungen erkannt werden. Von dem Neuronalen Netz erzeugte bzw. inferierte Ausgangsdaten werden anschließend weiterverarbeitet und hierzu einer weiteren Einrichtung, beispielsweise einer Steuereinrichtung oder einem Steuergerät, insbesondere eines Fahrzeugs, zugeführt. Die weitere Einrichtung kann auch Teil der Detektionseinrichtung sein, beispielsweise in Form einer die Detektionseinrichtung und das Neuronale Netz umfassenden Verarbeitungseinrichtung. Dort können die Ausgangsdaten beispielsweise zur Entscheidungsfindung beim automatisierten oder teilautomatisierten Fahren eines Fahrzeugs, insbesondere zur Trajektorien- oder Manöverplanung und/oder zum Ansteuern einer Aktorik des Fahrzeugs verwendet werden. Es ist insbesondere vorgesehen, dass auch das Erkennungsergebnis, beispielsweise in Form eines Erkennungsergebnissignals, bei der Weiterverarbeitung berücksichtigt wird. Insbesondere wird das Erkennungsergebnis, beispielsweise in Form des Erkennungsergebnissignals, der Steuereinrichtung oder dem Steuergerät zugeführt, sodass dieses das Erkennungsergebnis bei der Weiterverarbeitung berücksichtigen kann. Prinzipiell können das Neuronale Netz und das Verfahren auch in anderen Anwendungsszenarien eingesetzt werden, beispielsweise bei der Prozesskontrolle und/oder Prozessteuerung in der industriellen Fertigung etc.

Die Eingangsdaten des Neuronalen Netzes können eindimensional oder mehrdimensional sein. Die Eingangsdaten sind Sensordaten mindestens eines Sensors. Insbesondere sind die Eingangsdaten aktuell erfasste Sensordaten mindestens einen Sensors, die während der Anwendungsphase erfasst werden. Beispielsweise handelt es sich bei den Eingangsdaten um zweidimensionale Daten, insbesondere um mittels einer Kamera erfasste Bilddaten.

Ein Sensor ist insbesondere eine Kamera, ein Lidarsensor, ein Ultraschallsensor, ein Radarsensor oder ein sonstiger Sensor, der ein Umfeld eines Fahrzeugs erfasst.

Ein Fahrzeug ist insbesondere ein Kraftfahrzeug, Elektrofahrzeug oder Hybridfahrzeug. Prinzipiell kann ein Fahrzeug jedoch auch ein anderes Landfahrzeug, Schienenfahrzeug, Luftfahrzeug, Raumfahrzeug oder Wasserfahrzeug sein.

Eine adversariale Störung (engl. adversarial perturbation) ist insbesondere eine gezielt vorgenommene Störung der Eingangsdaten eines Neuronalen Netzes, bei der ein semantischer Inhalt in den Eingangsdaten zwar nicht verändert wird, die Störung jedoch dazu führt, dass das Neuronale Netz ein falsches Ergebnis inferiert, das heißt beispielsweise eine Fehlklassifikation oder eine falsche Segmentierung der Eingangsdaten vornimmt.

Ein Generative Adversarial Network ist insbesondere ein Verfahren zum Erzeugen bzw. Trainieren von Neuronalen Netzen, bei dem zwei Neuronale Netze, bezeichnet als Generatornetz und Diskriminatornetz, während einer Trainingsphase gegeneinander antreten und hierdurch trainiert werden.

Ein Conditional Generative Adversarial Network ist insbesondere ein Generative Adversarial Network, das darauf trainiert wird oder trainiert ist, Muster, die sich in Trainingsdaten finden, in generierten Daten, das heißt erfindungsgemäß den Eingangsdaten des Neuronalen Netzes, zu reproduzieren. Sind die Eingangsdaten Bilddaten, so kann das Conditional Generative Adversarial Network ungestörte Bilddaten mit (während der Trainingsphase angelernten) adversarialen Störungen versehen.

Es kann vorgesehen sein, dass zumindest die Anwendungsphase zyklisch für jeweils aktuell bereitgestellte und dem Diskriminatornetz zugeführte Eingangsdaten wiederholt wird. Hierdurch wird eine fortlaufende Überprüfung der Eingangsdaten des Neuronalen Netzes ermöglicht.

Die Recheneinrichtungen des Backendservers und/oder der Detektionseinrichtung können als eine Kombination von Hardware und Software ausgebildet sein, beispielsweise als Programmcode, der auf einem Mikrocontroller oder Mikroprozessor ausgeführt wird.

Das Neuronale Netz stellt eine Funktion für das automatisierte Fahren eines Fahrzeugs und/oder für eine Fahrerassistenz des Fahrzeugs und/oder für eine Erfassung eines Umfelds des Fahrzeugs und/oder Wahrnehmung des Umfelds des Fahrzeugs bereit.

Beispielsweise kann das Neuronale Netz eine Objekterkennung und/oder Objektklassifizierung und/oder eine Objektpositionserkennung (z.B. in Form von "bounding boxes") und/oder eine semantische Segmentierung bereitstellen. Es kann jedoch auch vorgesehen sein, dass vom Neuronale Netz erzeugte Ausgangsdaten Steuerdaten für eine Aktorik des Fahrzeugs sind.

In einer Ausführungsform ist vorgesehen, dass dem Neuronalen Netz während der Anwendungsphase erfasste Sensordaten mindestens eines Sensors als Eingangsdaten zugeführt werden und ausgehend von den Eingangsdaten Ausgangsdaten mittels des Neuronalen Netzes erzeugt und bereitstellt werden, wobei die Sensordaten des mindestens einen Sensors während der Anwendungsphase erfasst werden. Dies bedeutet, dass die Eingangsdaten insbesondere erfasste Sensordaten mindestens eines Sensors sind oder solche umfassen. Hierdurch kann das Verfahren auf aktuell erfasste Sensordaten zur Absicherung der Sensordaten und hiermit der Verarbeitungs- und Entscheidungskette, beispielsweise bei der Sensordatenauswertung beim automatisierten Fahren eines Fahrzeugs, insbesondere eines Kraftfahrzeugs, eingesetzt werden. Die erfassten Sensordaten können dann parallel zu einer Verarbeitung durch das Neuronale Netz auf adversariale Störungen hin überprüft werden. Eine Zuverlässigkeit und eine Sicherheit bei der Verarbeitung kann hierdurch erhöht werden. Vom Neuronalen Netz inferierte Ausgangsdaten werden anschließend beispielsweise für eine Entscheidungsfindung, insbesondere im Rahmen des automatisierten Fahrens eines Fahrzeugs, verwendet und bilden daher insbesondere die Grundlage oder eine der Grundlagen für die Entscheidungsfindung, beispielsweise für das Ansteuern einer Aktorik des Fahrzeugs.

In einer Ausführungsform ist vorgesehen, dass in Abhängigkeit des Erkennungsergebnisses ein Konfidenzwert der Eingangsdaten und/oder ein Konfidenzwert eines die Eingangsdaten bereitstellenden Sensors verändert wird. Ein Konfidenzwert der Eingangsdaten und/oder des Sensors ist insbesondere ein Maß für eine Vertrauenswürdigkeit der Eingangsdaten oder des Sensors. Werden beispielsweise von einer Kamera erfasste Kamerabilder mittels des Neuronalen Netzes ausgewertet, beispielsweise um Objekte in den erfassten Kamerabildern zu erkennen, eine Position der Objekte abzuschätzen (Schätzen von Bounding Boxes) oder eine semantische Segmentierung vorzunehmen, so werden die Kamerabilder, bevor diese dem Neuronalen Netz zugeführt werden, mittels des Diskriminatornetzes überprüft. Erkennt das Diskriminatornetz, dass die Eingangsdaten (Kamerabilder) adversarial gestört sind, so wird ein entsprechendes Erkennungsergebnis erzeugt und die erfassten Kamerabilder werden als adversarial gestört markiert. Den Eingangsdaten (Kamerabildern) wird dann ein geringerer Konfidenzwert als ungestörten Eingangsdaten (Kamerabildern) zugeordnet. Bei einer anschließenden Weiterverarbeitung der Eingangsdaten (Kamerabilder), können von dem Neuronalen Netz inferierte Ergebnisse, beispielsweise erkannte Objekte, ebenfalls mit einem geringeren Konfidenzwert verknüpft werden. Dies ermöglicht es, eine Vertrauenswürdigkeit der Eingangsdaten und der vom Neuronalen Netz inferierten Ergebnisse abzuschätzen und bei der Weiterverarbeitung, beispielsweise beim Bereitstellen einer Umfelderfassung und/oder einer automatischen Fahrfunktion, zu berücksichtigen.

In einer Ausführungsform ist vorgesehen, dass vom Neuronalen Netz erzeugte Ausgangsdaten in Abhängigkeit des bereitgestellten Erkennungsergebnisses bewertet werden und/oder dass in Abhängigkeit des Erkennungsergebnisses und/oder des veränderten Konfidenzwertes der Eingangsdaten und/oder des veränderten Konfidenzwertes des die Eingangsdaten bereitstellenden Sensors ein Konfidenzwert von Ausgangsdaten des Neuronalen Netzes verändert oder angepasst wird, wobei der Konfidenzwert zusätzlich zu den Ausgangsdaten bereitgestellt wird. Es ist hierdurch möglich, eine Vertrauenswürdigkeit bzw. eine Konfidenz der vom Neuronalen Netz inferierten Ausgangsdaten bei einer anschließenden Weiterverarbeitung, beispielsweise bei einer Trajektorienplanung und/oder beim Ansteuern einer Aktorik eines Fahrzeugs, zu berücksichtigen. Hierdurch lassen sich beispielsweise weniger vertrauenswürdigere Ausgangsdaten weniger stark berücksichtigten als vertrauenswürdigere Ausgangsdaten. In Abhängigkeit der Bewertung und/oder des Konfidenzwertes der Ausgangsdaten kann hierbei beispielsweise entschieden werden, wie stark die Ausgangsdaten berücksichtigt werden oder ob diese vollständig verworfen werden.

In einer Ausführungsform ist vorgesehen, dass in Abhängigkeit des Erkennungsergebnisses eine Gewichtung von auf Grundlage der Eingangsdaten mittels des Neuronalen Netzes inferierten Ausgangsdaten in gemittelten Ausgangsdaten und/oder einem mit den Ausgangsdaten arbeitenden Schätzverfahren verändert wird. Hierdurch können gemittelte Ausgangsdaten oder Schätzverfahren zuverlässiger bereitgestellt werden. Wird beispielsweise als Schätzfunktion eine Objekttrackingfunktion bereitgestellt, bei der auf Grundlage aktueller Eingangsdaten und vorherigen Schätzwerten für eine Objektposition und/oder eine Objektorientierung eine aktuelle Objektposition und/oder Objektorientierung geschätzt wird, und stellt sich beispielsweise heraus, dass dem Neuronalen Netz zugeführte Eingangsdaten adversarial gestört sind, so können die aktuellen Eingangsdaten beim Schätzen der Objektposition und/oder Objektorientierung zugunsten der vergangenen Schätzwerte eine geringere Gewichtung erhalten. Auch bei der anschließenden Weiterverarbeitung der Ausgangsdaten kann eine Gewichtung berücksichtigt werden, beispielsweise bei einer Trajektorien- und/oder Manöverplanung und/oder beim Steuern einer Aktorik.

Das Conditional Generative Adversarial Network wird während mindestens einer weiteren Trainingsphase auf mindestens eine weitere adversariale Störung trainiert.

Es werden hierbei neue adversariale Störungen bzw. Arten oder Klassen von adversarialen Störungen berücksichtigt. Das Conditional Generative Adversarial Network wird dann nachtrainiert.

In einer Ausführungsform ist vorgesehen, dass die Trainingsphase auf einem Backendserver ausgeführt wird, wobei die Anwendungsphase auf mindestens einer vom Backendserver separaten Detektionseinrichtung ausgeführt wird. Hierdurch kann das Anwenden des Diskriminatornetzes unabhängig von der Trainingsphase erfolgen. Die Trainingsphase kann hingegen zentral auf einem leistungsstarken Backendserver durchgeführt werden.

Prinzipiell ist es jedoch auch möglich, das Verfahren vollständig auf einer einzigen Recheneinrichtung (mit einer zugehörigen Speichereinrichtung) auszuführen. Dies kann beispielsweise zum Simulieren und/oder Testen erfolgen.

In einer Ausführungsform ist vorgesehen, dass die vom trainierten Generatornetz erzeugten adversarial gestörten Eingangsdaten zum Testen von mindestens einer Verteidigungsstrategie gegen adversariale Störungen und/oder zum Testen eines angepassten Neuronalen Netzes verwendet werden. Hierdurch kann eine Messlatte (engl. benchmark) bereitgestellt werden, auf Grundlage derer Verteidigungsstrategien gegen adversariale Störungen getestet und verbessert werden können. Eine Verteidigungsstrategie kann hierbei beispielsweise ein Verfahren zum Trainieren des Neuronalen Netzes oder zum Verändern einer Struktur des Neuronalen Netzes umfassen, sodass das Neuronale Netz robuster gegen die adversarial gestörten Eingangsdaten wird. Insbesondere kann vorgesehen sein, das trainierte Generatornetz bereitzustellen, sodass dieses zum Testen an verschiedenen Orten und/oder in verschiedenen Anwendungsszenarios eingesetzt werden kann. Das Bereitstellen erfolgt beispielsweise in Form eines eine Struktur, Gewichtungen und Parameter des trainierten Generatornetzes eindeutig beschreibenden digitalen Datenpakets.

Insbesondere wird ferner auch ein System geschaffen, umfassend einen Backendserver gemäß einer beliebigen der beschriebenen Ausführungsformen und mindestens eine Detektionseinrichtung gemäß einer beliebigen der beschriebenen Ausführungsformen. Der Backendserver und die mindestens eine Detektionseinrichtung umfassen insbesondere Kommunikationsschnittstellen, über die ein trainiertes Diskriminatornetz von dem Backendserver an die mindestens eine Detektionseinrichtung übermittelt werden kann. Merkmale zur Ausgestaltung des Backendservers und/oder der Detektionseinrichtung ergeben sich aus der Beschreibung von Ausgestaltungen des Verfahrens. Die Vorteile des Backendservers und/oder der Detektionseinrichtung sind hierbei jeweils die gleichen wie bei den Ausgestaltungen des Verfahrens.

Ferner wird insbesondere auch ein Fahrzeug geschaffen, umfassend mindestens eine Detektionseinrichtung gemäß einer der beschriebenen Ausführungsformen.

Es wird insbesondere auch ein Computerprogramm geschaffen, umfassend Befehle, die bei der Ausführung des Computerprogramms durch einen Computer diesen veranlassen, die Verfahrensschritte des offenbarten Verfahrens auszuführen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung von Ausführungsformen des Backendservers und der Detektionseinrichtung;
- Fig. 2: ein schematisches Ablaufdiagramm einer Ausführungsform des Verfahrens zum Erkennen einer adversarialen Störung in Eingangsdaten eines Neuronalen Netzes.

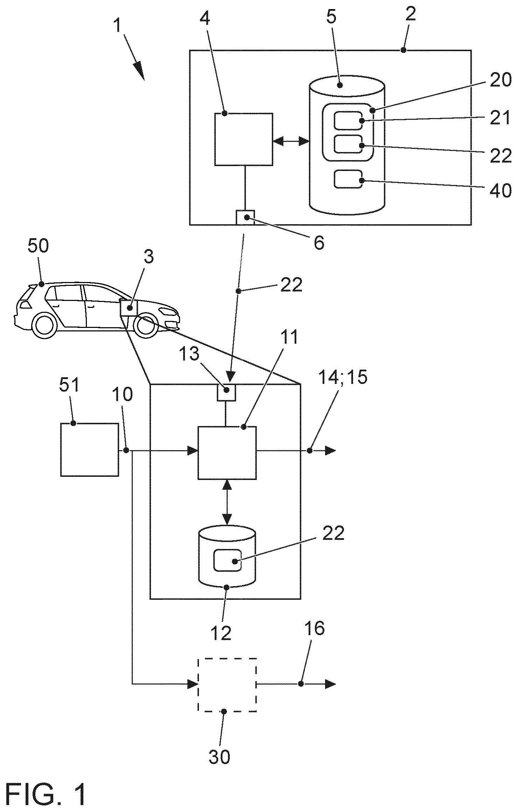

In Fig. 1 ist eine schematische Darstellung von Ausführungsformen des Backendservers 2 und der Detektionseinrichtung 3 gezeigt. Die Detektionseinrichtung 3 ist beispielsweise in einem Fahrzeug 50 ausgebildet und dient dort dem Überprüfen von Eingangsdaten 10 eines Neuronalen Netzes 30 (nur schematisch angedeutet), das eine Wahrnehmungsfunktion zur Umfelderfassung ausführt (z.B. Objekterkennung, Schätzen einer Bounding Box von Objekten und/oder Vornehmen einer semantischen Segmentierung). Der Backendserver 2 und die Detektionseinrichtung 3 bilden ein System 1.

Der Backendserver 2 umfasst eine Recheneinrichtung 4, eine Speichereinrichtung 5 und eine Kommunikationsschnittstelle 6. Die Recheneinrichtung 4 kann Rechenoperationen in der Speichereinrichtung 5 ausführen. Die Recheneinrichtung 4 ist derart ausgebildet ist, während einer Trainingsphase ein Conditional Generative Adversarial Network 20 bereitzustellen und zu trainieren, wobei hierbei ein Generatornetz 21 des Conditional Generative Adversarial Network 20 auf das Erzeugen von auf Eingangsdaten 10 des Neuronalen Netzes 30 konditionierten adversarialen Störungen trainiert wird, und ferner ein Diskriminatornetz 22 des Conditional Generative Adversarial Networks 20 zumindest auf das Erkennen einer adversarialen Störung in den von dem Generatornetz 21 erzeugten Eingangsdaten zu trainieren. Insbesondere führt die Recheneinrichtung 4 die zum Durchführen der Trainingsphase und Bereitstellen des Generative Adversarial Network 20 notwendigen Rechenoperationen aus.

Zum Trainieren des Generatornetzes 21 werden insbesondere mit Hilfe bekannter adversarialer Störungen adversarial gestörte Eingangsdaten 40 verwendet, die in der Speichereinrichtung 5 hinterlegt sind. Handelt es sich bei den Eingangsdaten 10 um Kamerabilder, so können zum Erzeugen der beim Trainieren verwendeten adversarial gestörten Eingangsdaten 40 beispielsweise bekannte Softwaretoolboxen, wie beispielsweise die IBM Adversarial Robustness Toolbox, CleverHans oder FoolBox verwendet werden. Mit diesen Toolboxen ist es möglich, ungestörte Kamerabilder gezielt mit adversarialen Störungen zu versehen.

Das trainierte Diskriminatornetz 22 wird nach Abschluss der Trainingsphase von dem Backendserver 2 bereitgestellt. Dies erfolgt über eine Kommunikationsschnittstelle 6 des Backendservers 2, die das Diskriminatornetz 22 als digitales Datenpaket, das eine Struktur, Gewichtungen und sonstige Parameter des Diskriminatornetzes 22 eindeutig beschreibt, an die Detektionseinrichtung 3 übermittelt.

Die Detektionseinrichtung 3 umfasst eine Recheneinrichtung 11, eine Speichereinrichtung 12 und eine Kommunikationsschnittstelle 13. Die Recheneinrichtung 3 ist derart ausgebildet, das von dem Backendserver 2 übermittelte trainierte Diskriminatornetz 22 als digitales Datenpaket über die Kommunikationsschnittstelle 13 zu empfangen und während einer Anwendungsphase das trainierte Diskriminatornetz 22 dazu zu verwenden, eine adversariale Störung in Eingangsdaten 10 des Neuronalen Netzes 30 zu erkennen und ein Erkennungsergebnis 14 bereitzustellen. Hierzu werden der Recheneinrichtung 11 die Eingangsdaten 10 zugeführt. Die Eingangsdaten 10 sind erfasste Sensordaten mindestens eines Sensors, beispielsweise von einer Kamera 51 des Fahrzeugs 50 erfasste Kamerabilder eines Umfelds des Fahrzeugs 50. Zum Detektieren führt die Recheneinrichtung 11 die notwendigen Rechenoperationen zum Bereitstellen und Ausführgen des Diskriminatornetzes 22 aus. Insbesondere werden die Eingangsdaten 10 Eingängen des Diskriminatornetzes 22 zugeführt. Das Diskriminatornetz 22 inferiert dann das Erkennungsergebnis 14 (z.B. Eingangsdaten 10 adversarial gestört: "ja" oder "nein").

Das Erkennungsergebnis 14 wird beispielsweise als Erkennungsergebnissignal 15 bereitgestellt und insbesondere ausgegeben, beispielsweise in Form eines digitalen Datenpakets. Das Erkennungsergebnis 14 umfasst insbesondere eine Information darüber, ob die Eingangsdaten 10, d.h. die erfassten Sensordaten, gestört sind oder nicht.

Es ist insbesondere vorgesehen, dass dem Neuronalen Netz 30 während der Anwendungsphase 200 die erfassten Sensordaten mindestens eines Sensors, beispielsweise der Kamera 51, als Eingangsdaten 10 zugeführt werden und ausgehend von den Eingangsdaten 10 Ausgangsdaten 16 mittels des Neuronalen Netzes 30 erzeugt und bereitstellt werden. Die erzeugten bzw. inferierten Ausgangsdaten 16 werden anschließend insbesondere bei einer Trajektorien- bzw. Manöverplanung und/oder zum Ansteuern einer Aktorik des Fahrzeugs 50 weiterverwendet.

Es ist daher vorgesehen, dass das Neuronale Netz 30 eine Funktion für das automatisierte Fahren des Fahrzeugs und/oder für eine Fahrerassistenz des Fahrzeugs und/oder für eine Erfassung eines Umfelds des Fahrzeugs und/oder Wahrnehmung des Umfelds des Fahrzeugs bereitstellt. Beispiele hierfür sind eine semantische Segmentierung und/oder eine Objekterkennung in Sensordaten, insbesondere in erfassten Kamerabildern.

Die Detektionseinrichtung 3 ermöglicht ein verbessertes Detektieren von adversarialen Störungen in Eingangsdaten 10 des Neuronalen Netzes 30. Vom Neuronalen Netz 30 auf Grundlage der Eingangsdaten 10 inferierte Ausgangsdaten 16 können hierdurch im Hinblick auf eine Vertrauenswürdigkeit bewertet werden.

Es kann vorgesehen sein, dass in Abhängigkeit des Erkennungsergebnisses 14 ein Konfidenzwert der Eingangsdaten 10 und/oder ein Konfidenzwert eines die Eingangsdaten 10 bereitstellenden Sensors, z.B. der Kamera 51, verändert wird.

Ferner kann vorgesehen sein, dass vom Neuronalen Netz 30 erzeugte Ausgangsdaten 16 in Abhängigkeit des bereitgestellten Erkennungsergebnisses 14 bewertet werden und/oder dass in Abhängigkeit des Erkennungsergebnisses 14 und/oder des veränderten Konfidenzwertes der Eingangsdaten 10 und/oder des veränderten Konfidenzwertes des die Eingangsdaten 10 bereitstellenden Sensors 51 ein Konfidenzwert von Ausgangsdaten 16 des Neuronalen Netzes 30 verändert oder angepasst wird, wobei der Konfidenzwert zusätzlich zu den Ausgangsdaten 16 bereitgestellt wird. Ein Bewertungsergebnis und/oder ein Konfidenzwert der Ausgangsdaten 16 kann bei einer anschließenden Weiterverarbeitung, beispielsweise bei einer Trajektorien- oder Manöverplanung und/oder beim Ansteuern einer Aktorik, berücksichtigt werden. In Abhängigkeit der Bewertung und/oder des Konfidenzwertes der Ausgangsdaten 16 kann hierbei entschieden werden, wie stark die Ausgangsdaten 16 berücksichtigt werden oder ob diese vollständig verworfen werden, das heißt bei der anschließenden Weiterverarbeitung nicht berücksichtigt werden.

Es kann vorgesehen sein, dass in Abhängigkeit des Erkennungsergebnisses 14 eine Gewichtung von auf Grundlage der Eingangsdaten 20 mittels des Neuronalen Netzes 30 inferierten Ausgangsdaten 16 in gemittelten Ausgangsdaten und/oder einem mit den Ausgangsdaten 16 arbeitenden Schätzverfahren verändert wird.

Es ist vorgesehen, dass das Conditional Generative Adversarial Network 20 während mindestens einer weiteren Trainingsphase auf mindestens eine weitere adversariale Störung trainiert wird.

Es kann vorgesehen sein, dass die vom trainierten Generatornetz 21 erzeugten adversarial gestörten Eingangsdaten 10 zum Testen von mindestens einer Verteidigungsstrategie gegen adversariale Störungen und/oder zum Testen eines angepassten Neuronalen Netzes verwendet werden.

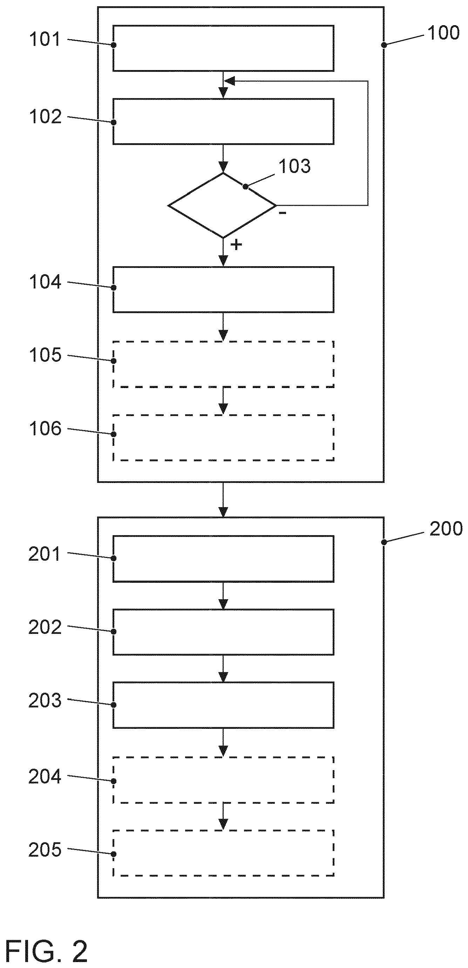

In Fig. 2 ist ein schematisches Ablaufdiagramm einer Ausführungsform des Verfahrens zum Erkennen einer adversarialen Störung in Eingangsdaten eines Neuronalen Netzes gezeigt.

Das Verfahren umfasst eine Trainingsphase 100 und eine Anwendungsphase 200.

Während der Trainingsphase 100 werden in einem Verfahrensschritt 101 adversarial gestörte Eingangsdaten als Trainingsdaten erzeugt. Dies kann mittels einer Recheneinrichtung eines erfindungsgemäßen Backendservers oder auch mittels einer anderen Recheneinrichtung erfolgen. Handelt es sich bei den Eingangsdaten um Kamerabilder, so können zum Erzeugen der adversarial gestörten Eingangsdaten beispielsweise bekannte Softwaretoolboxen, wie beispielsweise die IBM Adversarial Robustness Toolbox, CleverHans oder FoolBox verwendet werden. Mit diesen Toolboxen ist es möglich, ungestörte Kamerabilder gezielt mit adversarialen Störungen zu versehen. Die derart erzeugten Eingangsdaten werden anschließend als Trainingsdaten zum Trainieren eines Generatornetzes eines Conditional Generative Adversarial Network verwendet.

In einem Verfahrensschritt 102 wird das Conditional Generative Adversarial Network trainiert. Hierbei wird das Generatornetz des Conditional Generative Adversarial Network auf das Erzeugen von auf Eingangsdaten des Neuronalen Netzes konditionierten adversarialen Störungen trainiert. Ein Diskriminatornetz des Conditional Generative Adversarial Networks wird auf das Erkennen einer adversarialen Störung in den von dem Generatornetz erzeugten Eingangsdaten trainiert.

In einem Verfahrensschritt 103 wird überprüft, ob eine funktionale Güte des Generatornetzes und des Diskriminatornetzes erreicht wurde. Insbesondere wird überprüft, ob ein Gleichgewichtszustand erreicht wird, bei dem das Diskriminatornetz von dem Generatornetz bereitgestellte adversarial gestörte Eingangsdaten mit einer Wahrscheinlichkeit von 50 % richtig klassifiziert. Ist dies nicht der Fall, so wird das Conditional Generative Adversarial Network weiter trainiert.

Ist eine ausreichende funktionale Güte erreicht, so wird das trainierte Diskriminatornetz des Conditional Generative Adversarial Network in einem Verfahrensschritt 104 bereitgestellt. Hierzu wird das trainierte Diskriminatornetz insbesondere in Form eines eine Struktur, Gewichtungen und Parameter des trainierten Diskriminatornetzes umfassenden digitalen Datenpakets an eine Detektionseinrichtung übermittelt, welche beispielsweise zum Erkennen von adversarialen Störungen in einem Fahrzeug, insbesondere einem Kraftfahrzeug, verwendet wird.

In der Anwendungsphase 200 wird in einem Verfahrensschritt 201 das bereitgestellte trainierte Diskriminatornetz von der Detektionseinrichtung empfangen und bereitgestellt.

In einem Verfahrensschritt 202 wird das trainierte Diskriminatornetz auf Eingangsdaten eines Neuronalen Netzes, das beispielsweise eine Objekterkennung durchführt, angewendet. Die Eingangsdaten sind beispielsweise aktuelle erfasste Sensordaten mindestens eines Sensors, insbesondere Kameradaten einer ein Umfeld erfassenden Kamera. Das trainierte Diskriminatornetz erkennt, ob die Eingangsdaten adversarial gestört sind oder nicht. Hierzu inferiert das trainierte Diskriminatornetz auf Grundlage der zugeführten Eingangsdaten ein Erkennungsergebnis.

In einem Verfahrensschritt 203 wird das Erkennungsergebnis bereitgestellt, insbesondere ausgegeben, beispielsweise in Form eines Erkennungsergebnissignals, insbesondere in Form eines digitalen Datenpakets.

Es kann in einem Verfahrensschritt 204 vorgesehen sein, dass in Abhängigkeit des Erkennungsergebnisses ein Konfidenzwert der Eingangsdaten und/oder ein Konfidenzwert eines die Eingangsdaten bereitstellenden Sensors verändert wird.

Es kann in Verfahrensschritt 204 alternativ oder zusätzlich vorgesehen sein, dass vom Neuronalen Netz 30 erzeugte Ausgangsdaten 16 in Abhängigkeit des bereitgestellten Erkennungsergebnisses 14 bewertet werden und/oder dass in Abhängigkeit des Erkennungsergebnisses 14 und/oder des veränderten Konfidenzwertes der Eingangsdaten 10 und/oder des veränderten Konfidenzwertes des die Eingangsdaten 10 bereitstellenden Sensors 51 ein Konfidenzwert von Ausgangsdaten 16 des Neuronalen Netzes 30 verändert oder angepasst wird, wobei der Konfidenzwert zusätzlich zu den Ausgangsdaten 16 bereitgestellt wird.

Es kann in einem Verfahrensschritt 205 vorgesehen sein, dass in Abhängigkeit des Erkennungsergebnisses eine Gewichtung von auf Grundlage der Eingangsdaten mittels des Neuronalen Netzes inferierten Ausgangsdaten in gemittelten Ausgangsdaten und/oder einem mit den Ausgangsdaten arbeitenden Schätzverfahren verändert wird.

In einem Verfahrensschritt 105 ist vorgesehen, dass das Conditional Generative Adversarial Network während mindestens einer weiteren Trainingsphase auf mindestens eine weitere adversariale Störung trainiert wird.

In einem Verfahrensschritt 106 kann vorgesehen sein, dass die vom trainierten Generatornetz erzeugten adversarial gestörten Eingangsdaten zum Testen von mindestens einer Verteidigungsstrategie gegen adversariale Störungen und/oder zum Testen eines angepassten Neuronalen Netzes verwendet werden.

Ist ein trainiertes Diskriminatornetz bereits vorhanden, das heißt wird ein gemäß der Trainingsphase 100 trainiertes Diskriminatornetz bereitgestellt, so kann das Verfahren auch nur die Verfahrensschritte 201-205 der Anwendungsphase 200 umfassen.

Das Verfahren hat den Vorteil, dass adversariale Störungen verbessert erkannt werden können. Hierdurch können adversariale Angriffe verbessert erkannt und verhindert werden.

### Bezugszeichenliste

- 1: System
- 2: Backendserver
- 3: Detektionseinrichtung
- 4: Recheneinrichtung (Backendserver)
- 5: Speichereinrichtung (Backendserver)
- 6: Kommunikationsschnittstelle (Backendserver)
- 10: Eingangsdaten
- 11: Recheneinrichtung (Detektionseinrichtung)
- 12: Speichereinrichtung (Detektionseinrichtung)
- 13: Kommunikationsschnittstelle (Detektionseinrichtung)
- 14: Erkennungsergebnis
- 15: Erkennungsergebnissignal
- 16: Ausgangsdaten
- 20: Conditional Generative Adversarial Network
- 21: Generatornetz
- 22: Diskriminatornetz
- 30: Neuronales Netz
- 40: adversarial gestörte Eingangsdaten (Trainingsdaten)
- 50: Fahrzeug
- 51: Kamera
- 100: Trainingsphase
- 100-106: Verfahrensschritte
- 200: Anwendungsphase
- 201-205: Verfahrensschritte

## Patentansprüche

1. Computerimplementiertes Verfahren zum Trainieren eines Diskriminatornetzes (22) eines Conditional Generative Adversarial Networks (20) zum Erkennen, mittels des trainierten Diskriminatornetzes (22), einer adversarialen Störung in Sensordaten mindestens eines Sensors eines Fahrzeugs (50), welche als Eingangsdaten (10) einem Neuronalen Netz (30) zugeführt werden, wobei das Neuronale Netz (30) eine Funktion für das automatisierte Fahren des Fahrzeugs (50) und/oder für eine Fahrerassistenz des Fahrzeugs (50) und/oder für eine Erfassung eines Umfelds des Fahrzeugs (50) und/oder Wahrnehmung des Umfelds des Fahrzeugs (50) bereitstellt,
wobei während einer Trainingsphase (100):
ein Conditional Generative Adversarial Network (20) trainiert wird, wobei hierbei ein Generatornetz (21) des Conditional Generative Adversarial Network (20) auf das Erzeugen von auf Eingangsdaten (10) des Neuronalen Netzes (30) konditionierten adversarialen Störungen trainiert wird oder wurde, und wobei ein Diskriminatornetz (22) des Conditional Generative Adversarial Network (20) zumindest auf das Erkennen einer adversarialen Störung in den von dem Generatornetz (21) erzeugten Eingangsdaten (10) trainiert wird,
wobei das Conditional Generative Adversarial Network (20) während mindestens einer weiteren Trainingsphase (100) auf mindestens eine weitere adversariale Störung nachtrainiert wird, welche eine neue adversariale Störung ist und/oder neue Arten oder Klassen von adversarialen Störungen berücksichtigt.

2. Verfahren nach Anspruch 1, **dadurch gekennzeichnet, dass** während einer Anwendungsphase (200):
das trainierte Diskriminatornetz (22) dazu verwendet wird, eine adversariale Störung in Eingangsdaten (10) des Neuronalen Netzes (30) zu erkennen und ein Erkennungsergebnis (14) bereitzustellen, und
wobei die Eingangsdaten (10) Sensordaten mindestens eines Sensors des Fahrzeugs (50) sind.

3. Verfahren nach Anspruch 2, **dadurch gekennzeichnet, dass** dem Neuronalen Netz (30) während der Anwendungsphase (200) erfasste Sensordaten mindestens eines Sensors (51) als Eingangsdaten (10) zugeführt werden und ausgehend von den Eingangsdaten (10) Ausgangsdaten (16) mittels des Neuronalen Netzes (30) erzeugt und bereitstellt werden, wobei die Sensordaten des mindestens einen Sensors (51) während der Anwendungsphase (200) erfasst werden.

4. Verfahren nach einem der Ansprüche 2 oder 3, **dadurch gekennzeichnet, dass** in Abhängigkeit des Erkennungsergebnisses (14) ein Konfidenzwert der Eingangsdaten (10) und/oder ein Konfidenzwert eines die Eingangsdaten (10) bereitstellenden Sensors (51) verändert wird.

5. Verfahren nach einem der Ansprüche 2 bis 4, **dadurch gekennzeichnet, dass**, wenn abhängig vom Anspruch 2 oder vom Anspruch 3, vom Neuronalen Netz (30) erzeugte Ausgangsdaten (16) in Abhängigkeit des bereitgestellten Erkennungsergebnisses (14) bewertet werden oder dass, wenn abhängig vom Anspruch 4, in Abhängigkeit des Erkennungsergebnisses (14) und/oder des veränderten Konfidenzwertes der Eingangsdaten (10) und/oder des veränderten Konfidenzwertes des die Eingangsdaten (10) bereitstellenden Sensors (51) ein Konfidenzwert von Ausgangsdaten (16) des Neuronalen Netzes (30) verändert oder angepasst wird, wobei der Konfidenzwert zusätzlich zu den Ausgangsdaten (16) bereitgestellt wird.

6. Verfahren nach einem der Ansprüche 2 bis 5, **dadurch gekennzeichnet, dass** in Abhängigkeit des Erkennungsergebnisses (14) eine Gewichtung von auf Grundlage der Eingangsdaten (10) mittels des Neuronalen Netzes (30) inferierten Ausgangsdaten (16) in gemittelten Ausgangsdaten und/oder einem mit den Ausgangsdaten (16) arbeitenden Schätzverfahren verändert wird.

7. Verfahren nach einem der vorangegangenen Ansprüche, **dadurch gekennzeichnet, dass** die Trainingsphase (100) auf einem Backendserver (2) ausgeführt wird, wobei die Anwendungsphase (200) auf mindestens einer vom Backendserver (2) separaten Detektionseinrichtung (3) ausgeführt wird.

8. Verfahren nach einem der vorangegangenen Ansprüche, **dadurch gekennzeichnet, dass** die vom trainierten Generatornetz (21) erzeugten adversarial gestörten Eingangsdaten (10) zum Testen von mindestens einer Verteidigungsstrategie gegen adversariale Störungen und/oder zum Testen eines angepassten Neuronalen Netzes (30) verwendet werden.

9. Backendserver (2), umfassend:
eine Recheneinrichtung (4) und eine Speichereinrichtung (5),
wobei die Recheneinrichtung (4) derart ausgebildet ist, ein Conditional Generative Adversarial Network (20) bereitzustellen und das Diskriminatornetz (22) des Conditional Generative Adversarial Network gemäß dem Verfahren nach einem der Ansprüche 1 bis 8 zu trainieren.

10. Detektionseinrichtung (3) zum Detektieren adversarialer Störungen in Eingangsdaten (10) eines Neuronalen Netzes (30), wobei das Neuronale Netz (30) eine Funktion für das automatisierte Fahren eines Fahrzeugs und/oder für eine Fahrerassistenz des Fahrzeugs und/oder für Erfassung eines Umfelds des Fahrzeugs und/oder Wahrnehmung des Umfelds des Fahrzeugs bereitstellt, umfassend:
eine Recheneinrichtung (11) und eine Speichereinrichtung (12),
wobei die Recheneinrichtung (11) derart ausgebildet ist, ein gemäß dem Verfahren nach einem der Ansprüche 1 bis 8 trainiertes Diskriminatornetz (22) bereitzustellen und hiermit eine adversariale Störung in Eingangsdaten (10) des Neuronalen Netzes (30) zu erkennen und ein Erkennungsergebnis (14) bereitzustellen, und
wobei die Eingangsdaten (10) Sensordaten mindestens eines Sensors des Fahrzeugs (50) sind.

11. System (1) zum Erkennen einer adversarialen Störung in Eingangsdaten (10) eines Neuronalen Netzes (30), umfassend einen Backendserver (2) gemäß Anspruch 9 und mindestens eine Detektionseinrichtung (3) gemäß Anspruch 10.

12. Fahrzeug (50), umfassend mindestens eine Detektionseinrichtung (3) nach Anspruch 10.

13. Computerprogramm, umfassend Befehle, die bei der Ausführung des Computerprogramms durch einen Computer diesen veranlassen, die Verfahrensschritte des Verfahrens nach einem beliebigen der Ansprüche 1 bis 8 auszuführen.

## Claims

1. Computer-implemented method for training a discriminator network (22) of a conditional generative adversarial network (20) to identify, by means of the trained discriminator network (22), an adversarial disturbance in sensor data of at least one sensor of a vehicle (50), which sensor data are supplied as input data (10) to a neural network (30), wherein the neural network (30) provides a function for automated driving of the vehicle (50) and/or for driver assistance of the vehicle (50) and/or for capturing an environment of the vehicle (50) and/or for perceiving the environment of the vehicle (50),
wherein during a training phase (100):
a conditional generative adversarial network (20) is trained, wherein in this case a generator network (21) of the conditional generative adversarial network (20) is or was trained to generate adversarial disturbances conditioned on input data (10) of the neural network (30), and wherein a discriminator network (22) of the conditional generative adversarial network (20) is trained at least to identify an adversarial disturbance in the input data (10) generated by the generator network (21),
wherein the conditional generative adversarial network (20) is subsequently trained, during at least one further training phase (100), in at least one further adversarial disturbance which is a new adversarial disturbance and/or takes into account new types or classes of adversarial disturbances.

2. Method according to claim 1, **characterized in that,** during an application phase (200):
the trained discriminator network (22) is used to identify an adversarial disturbance in input data (10) of the neural network (30) and to provide an identification result (14), and
wherein the input data (10) are sensor data of at least one sensor of the vehicle (50).

3. Method according to claim 2, **characterized in that** sensor data of at least one sensor (51) captured during the application phase (200) are supplied to the neural network (30) as input data (10), and output data (16) are generated and provided based on the input data (10) by means of the neural network (30), wherein the sensor data of the at least one sensor (51) are captured during the application phase (200).

4. Method according to either claim 2 or claim 3, **characterized in that,** depending on the identification result (14), a confidence value of the input data (10) and/or a confidence value of a sensor (51) providing the input data (10) is changed.

5. Method according to any of claims 2 to 4, **characterized in that,** when dependent on claim 2 or claim 3, output data (16) generated by the neural network (30) are evaluated depending on the provided identification result (14), or **in that**, when dependent on claim 4, a confidence value of output data (16) of the neural network (30) is changed or adjusted depending on the identification result (14) and/or depending on the changed confidence value of the input data (10) and/or depending on the changed confidence value of the sensor (51) providing the input data (10), wherein the confidence value is provided in addition to the output data (16).

6. Method according to any of claims 2 to 5, **characterized in that,** depending on the identification result (14), a weighting of output data (16) inferred on the basis of the input data (10) by means of the neural network (30) is changed into averaged output data and/or an estimation method working with the output data (16).

7. Method according to any of the preceding claims, **characterized in that** the training phase (100) is executed on a backend server (2), wherein the application phase (200) is executed on at least one detection device (3) separate from the backend server (2).

8. Method according to any of the preceding claims, **characterized in that** the adversarially disturbed input data (10) generated by the trained generator network (21) are used to test at least one defense strategy against adversarial disturbances and/or to test an adjusted neural network (30).

9. Backend server (2) comprising:
a computing device (4) and a storage device (5),
wherein the computing device (4) is designed to provide a conditional generative adversarial network (20) and to train the discriminator network (22) of the conditional generative adversarial network according to the method according to any of claims 1 to 8.

10. Detection device (3) for detecting adversarial disturbances in input data (10) of a neural network (30), wherein the neural network (30) provides a function for automated driving of a vehicle and/or for driver assistance of the vehicle and/or for capturing an environment of the vehicle and/or perceiving the environment of the vehicle, comprising:
a computing device (11) and a storage device (12),
wherein the computing device (11) is designed to provide a discriminator network (22) trained according to the method according to any of claims 1 to 8 and thereby to identify an adversarial disturbance in input data (10) of the neural network (30) and to provide an identification result (14), and
wherein the input data (10) are sensor data of at least one sensor of the vehicle (50).

11. System (1) for identifying an adversarial disturbance in input data (10) of a neural network (30), comprising a backend server (2) according to claim 9 and at least one detection device (3) according to claim 10.

12. Vehicle (50), comprising at least one detection device (3) according to claim 10.

13. Computer program comprising commands which, when the computer program is executed by a computer, cause said computer to carry out the method steps of the method according to any of claims 1 to 8.

## Revendications

1. Procédé mis en œuvre par ordinateur pour l'entraînement d'un réseau discriminant (22) d'un réseau antagoniste génératif conditionnel (20) pour la reconnaissance, au moyen du réseau discriminant (22) entraîné, d'une perturbation antagoniste dans des données de capteur d'au moins un capteur d'un véhicule (50), lesquelles sont amenées comme données d'entrée (10) à un réseau neuronal (30), dans lequel le réseau neuronal (30) fournit une fonction pour la conduite automatisée du véhicule (50) et/ou pour une aide à la conduite du véhicule (50) et/ou pour une détection d'un environnement du véhicule (50) et/ou une perception de l'environnement du véhicule (50),
dans lequel, pendant une phase d'entraînement (100) :
un réseau antagoniste génératif conditionnel (20) est entraîné, dans lequel un réseau génératif (21) du réseau antagoniste génératif conditionnel (20) est entraîné à générer des perturbations antagonistes conditionnées sur des données d'entrée (10) du réseau neuronal (30), et dans lequel un réseau discriminant (22) du réseau antagoniste génératif conditionnel (20) est entraîné au moins à la reconnaissance d'une perturbation antagoniste dans les données d'entrée (10) générées par le réseau génératif (21),
dans lequel le réseau antagoniste génératif conditionnel (20) est réentraîné pendant au moins une autre phase d'entraînement (100) à au moins une autre perturbation antagoniste, laquelle est une nouvelle perturbation antagoniste et/ou prend en compte de nouveaux types ou classes de perturbations antagonistes.

2. Procédé selon la revendication 1, **caractérisé en ce que,** pendant une phase d'application (200) :
le réseau discriminant (22) entraîné est utilisé pour reconnaitre une perturbation antagoniste dans des données d'entrée (10) du réseau neuronal (30) et pour fournir un résultat de reconnaissance (14), et
dans lequel les données d'entrée (10) sont des données de capteur d'au moins un capteur du véhicule (50).

3. Procédé selon la revendication 2, **caractérisé en ce que** des données de capteur d'au moins un capteur (51) détectées pendant la phase d'application (200) sont amenées au réseau neuronal (30) en tant que données d'entrée (10) et, à partir des données d'entrée (10), des données de sortie (16) sont générées et fournies au moyen du réseau neuronal (30), dans lequel les données de capteur de l'au moins un capteur (51) sont détectées pendant la phase d'application (200).

4. Procédé selon l'une des revendications 2 ou 3, **caractérisé en ce que,** en fonction du résultat de reconnaissance (14), une valeur de confiance des données d'entrée (10) et/ou une valeur de confiance d'un capteur (51) fournissant les données d'entrée (10) sont modifiées.

5. Procédé selon l'une des revendications 2 à 4, **caractérisé en ce que,** si elle dépend de la revendication 2 ou de la revendication 3, des données de sortie (16) générées par le réseau neuronal (30) sont évaluées en fonction du résultat de reconnaissance (14) fourni **ou en ce que,** si elle dépend de la revendication 4, en fonction du résultat de reconnaissance (14) et/ou de la valeur de confiance modifiée des données d'entrée (10) et/ou de la valeur de confiance modifiée du capteur (51) fournissant les données d'entrée (10), une valeur de confiance de données de sortie (16) du réseau neuronal (30) est modifiée ou adaptée, dans lequel la valeur de confiance est fournie en plus des données de sortie (16).

6. Procédé selon l'une des revendications 2 à 5, **caractérisé en ce que,** en fonction du résultat de reconnaissance (14), une pondération de données de sortie (16) inférées sur la base des données d'entrée (10) au moyen du réseau neuronal (30) est modifiée dans des données de sortie moyennées et/ou dans un procédé d'estimation travaillant avec les données de sortie (16).

7. Procédé selon l'une des revendications précédentes,
**caractérisé en ce que** la phase d'entraînement (100) est exécutée sur un serveur dorsal (2), dans lequel la phase d'application (200) est exécutée sur au moins un dispositif de détection (3) distinct du serveur dorsal (2).

8. Procédé selon l'une des revendications précédentes,
**caractérisé en ce que** les données d'entrée (10) à perturbations antagonistes générées par le réseau génératif (21) entraîné sont utilisées pour tester au moins une stratégie de défense contre des perturbations antagonistes et/ou pour tester un réseau neuronal (30) adapté.

9. Serveur dorsal (2), comprenant :
un dispositif de calcul (4) et un dispositif de stockage (5),
dans lequel le dispositif de calcul (4) est configuré de manière à fournir un réseau antagoniste génératif conditionnel (20) et à entraîner le réseau discriminant (22) du réseau antagoniste génératif conditionnel conformément au procédé selon l'une des revendications 1 à 8.

10. Dispositif de détection (3) permettant la détection de perturbations antagonistes dans des données d'entrée (10) d'un réseau neuronal (30), dans lequel le réseau neuronal (30) fournit une fonction pour la conduite automatisée d'un véhicule et/ou pour une aide à la conduite du véhicule et/ou pour une détection d'un environnement du véhicule et/ou une perception de l'environnement du véhicule, comprenant :
un dispositif de calcul (11) et un dispositif de stockage (12),
dans lequel le dispositif de calcul (11) est configuré de manière à fournir un réseau discriminant (22) entraîné conformément au procédé selon l'une des revendications 1 à 8 et à reconnaitre ainsi une perturbation antagoniste dans des données d'entrée (10) du réseau neuronal (30) et fournir un résultat de reconnaissance (14), et
dans lequel les données d'entrée (10) sont des données de capteur d'au moins un capteur du véhicule (50).

11. Système (1) permettant la reconnaissance d'une perturbation antagoniste dans des données d'entrée (10) d'un réseau neuronal (30), comprenant un serveur dorsal (2) selon la revendication 9 et au moins un dispositif de détection (3) selon la revendication 10.

12. Véhicule (50), comprenant au moins un dispositif de détection (3) selon la revendication 10.

13. Programme informatique, comprenant des instructions qui, lors de l'exécution du programme informatique par un ordinateur, amènent celui-ci à exécuter les étapes de procédé du procédé selon l'une quelconque des revendications 1 à 8.
